# EUROPÄISCHE PATENTANMELDUNG

(11) **EP 0 728 447 A2**
(43) Veröffentlichungstag der Anmeldung: **28.08.1996**
(21) Anmeldenummer: 96102553.3
(22) Anmeldetag: 21.02.1996
(51) Int. Cl.: A61C 15/04

(54) **Zahnseidenhalter**

(30) Priorität: 25.02.1995 DE 29503229 U
(71) Anmelder: Lanfer, Annette, 49824 Neugnadenfeld (DE)
(72) Erfinder: Lanfer, Annette, 49824 Neugnadenfeld (DE)
(74) Vertreter: Busse & Busse Patentanwälte

(57) **Zusammenfassung**

Ein Zahnseidenhalter ist mit einem Griffteil (2) und einem Gabelteil (3) mit zwei Halteschenkeln (4, 5) versehen, zwischen denen zumindest ein Zahnseidenfaden (6) verspannbar ist. Die beiden Halteschenkel (4, 5) sind dabei jeweils von einem Hebelarm (8, 9) zweier Winkelhebel (10, 11) gebildet. Diese Winkelhebel (10, 11) sind in gegensinniger Winkelausrichtung im Scheitelbereich ihrer Hebelarme (8, 9, 12, 13) um eine gemeinsame Achse (14) schwenkbar miteinander verbunden.

## Beschreibung

Die Erfindung bezieht sich auf einen Zahnseidenhalter in einer Ausbildung nach dem Oberbegriff des Anspruches 1.

Bei einem bekannten Zahnseidenhalter (DE-GM 85 18 730) wird ein zur Reinigung der Zahn-Zwischenräume vorgesehener Zahnseidenfaden im Bereich zweier Halteschenkel eines Gabelteils verspannt und danach kann der Zahnseidenhalter in seiner Gebrauchsstellung an einem Griffteil so erfaßt werden, daß die Einführung des gespannten Zahnseidenfadenteils in die Zahn-Zwischenräume möglich ist. Zum Spannen der Zahnseide ist im Bereich des Griffteils eine konstruktiv aufwendige Fadenhaltevorrichtung vorgesehen, mit der bei komplizierter Handhabung auch die Gestehungskosten des Zahnseidenhalters insgesamt nachteilig beeinflußt sind.

Der Erfindung liegt die Aufgabe zugrunde, einen Zahnseidenhalter zu schaffen, der auch in verschiedenen Größen kostengünstiger als herkömmliche Zahnseidenhalter herstellbar ist und dabei mit geringem Aufwand eine einfache und schnelle Spannung des Zahnseidenfadens ermöglicht.

Zur Lösung dieser Aufgabe zeichnet sich der Zahnseidenhalter durch die im kennzeichnenden Teil des Anspruchs 1 angegebenen Merkmale aus. Hinsichtlich wesentlicher weiterer Ausgestaltungen des Zahnseidenhalters wird auf die Ansprüche 2 bis 11 verwiesen.

Der Zahnseidenhalter nach der Erfindung ist im Bereich seines Griffteils und seines Gabelteils von zwei Winkelhebeln gebildet, die als insbesondere einstückige Einzelbauteile mit geringem Aufwand herstellbar sind und auf einfache Weise im Bereich ihrer im Scheitelbereiche der jeweiligen Hebelkontur befindlichen gemeinsamen Verbindungsachse montiert werden können. Die beidseits dieser Gelenkachse befindlichen Hebelarme der beiden Winkelhebel können nun paarweise zusammenwirken, wobei die beiden hinteren Griff-Hebelarme mit vorteilhaft geringem Kraftaufwand gegensinnig so verschwenkbar sind, daß die vorderen, als die Halteschenkel ausgebildeten Hebelarme über eine Spreizbewegung den Zahnseidenfaden spannen oder bei einer Bewegungsumkehr entspannen.

Dabei kann dem Zahnseidenfaden eine vom Benutzer beliebig veränderbare Verspannung so vermittelt werden, daß eine problemlose Einführung des gespannten Zahnseidenfadens in einen Zahnzwischenraum möglich ist. Gleichzeitig liegen die beiden den Griffteil bildenden Hebelarme der Winkelhebel so aneinander an, daß der Griffteil eine geschlossene Einheit bildet und diese für den Benutzer eine bequeme Griffhaltung ermöglicht.

Die beiden Winkelhebel sind in vorteilhafter Ausbildung im Bereich der Gelenkachse mit Verbindungsteilen versehen, die über eine einfache Steckverbindung sowohl eine einfache Montage als auch Demontage ermöglichen, so daß eine schnelle Reinigung des Zahnseidenhalters auch von wenig geübten Benutzern, beispielsweise Kindern, durchgeführt werden kann.

Weitere Einzelheiten und Vorteile der Erfindung ergeben sich aus der nachfolgenden Beschreibung und der Zeichnung, die zwei Ausführungsbeispiele eines erfindungsgemäßen Zahnseidenhalters veranschaulicht. In der Zeichnung zeigt:
- Fig. 1: eine Draufsicht auf den erfindungsgemäßen Zahnseidenhalter in Öffnungsstellung,
- Fig. 2: eine Seitenansicht des Zahnseidenhalters gemäß Fig. 1,
- Fig. 3: eine Einzeldarstellung des Zahnseidenhalters im Bereich eines den Zahnseidenfaden aufnehmenden Halteteils,
- Fig. 4: einen Zahnseidenhalter mit einem Halteteil in einer zweiten Ausführungsform,
- Fig. 5: eine Draufsicht auf den Zahnseidenhalter gemäß Fig. 4,
- Fig. 6: eine Seitenansicht des Zahnseidenhalters gemäß Fig. 4,
- Fig. 7: eine vergrößerte Einzeldarstellung eines den Zahnseidenfaden im Bereich des Griffteils festlegenden Halteteils,
- Fig. 8: eine Draufsicht auf das Halteteil gemäß Fig. 7 und
- Fig. 9: eine Vorderansicht des Halteteils ähnlich Fig. 7 mit einem Spannexzenter.

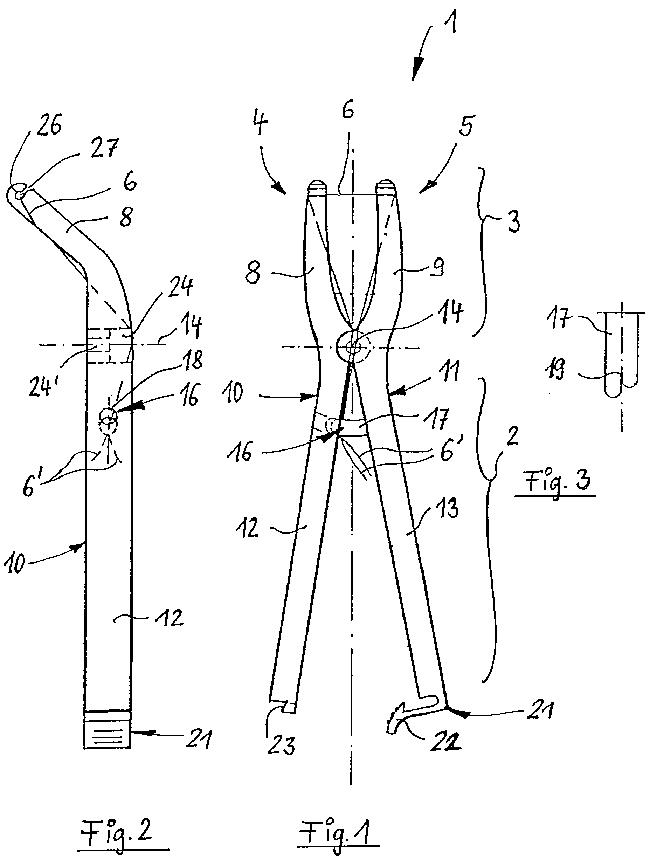

In Fig. 1 ist ein insgesamt mit 1 bezeichneter Zahnseidenhalter dargestellt, der einerseits ein Griffteil 2 und andererseits einen Gabelteil 3 mit zwei Halteschenkeln 4, 5 aufweist, wobei zwischen diesen ein Zahnseidefaden 6 verspannt ist.

Der Zahnseidenhalter 1 erfindungsgemäßer Ausbildung weist zwei Halteschenkel 4, 5 auf, die jeweils von einem Hebelarm 8, 9 zweier Winkelhebel 10, 11 gebildet sind und wobei diese in gegensinniger Winkelausrichtung im Scheitelbereich ihrer Hebelarme 8, 9 bzw. 12, 13 um eine gemeinsame Achse 14 verschwenkbar miteinander verbunden sind. Die den Halteschenkeln 8, 9 auf der anderen Seite der Schwenkachse 14 gegenüberliegenden Hebelarme 12, 13 bilden dabei gemeinsam den Griffteil 2.

In zweckmäßiger Ausführung sind die beiden Griff-Hebelarme 12, 13 mit einem die jeweiligen Endbereiche des zwischen den Spann-Hebelarmen 8, 9 befindlichen Zahnseidenfadens 6 aufnehmenden Halteteil 16 versehen.

Der Halteteil 16 weist dabei einerseits einen am ersten der Griff-Hebelarme 13 vorgesehenen Bolzenansatz 17 auf, der andererseits in Spannstellung in eine Aufnahmebohrung 18 im zweiten Griff-Hebelarm 12 einführbar ist. Die vergrößerte Einzeldarstellung gemäß Fig. 3 verdeutlicht, daß der Bolzenansatz 17 mit einer den Zahnseidenfaden 6 aufnehmenden Klemmnut 19 versehen ist, in die die Fadenenden 6' einlegbar sind und danach gemeinsam in der Spannstellung der beiden Griff-Hebelarme 12, 13 mit dem Bolzenansatz 17 in der Aufnahmebohrung 18 festgelegt werden.

In zweckmäßiger Ausführung sind die beiden Griff-Hebelarme 12, 13 im Bereich ihres freien Endes mit einem Rastverbinder 21 versehen, der ein Hakenteil 22 aufweist, mit dem ein Formansatz 23 am Griff-Hebelarm 12 derart hintergriffen werden kann, daß die beiden Griff-Hebelarme 12, 13 in der vorgegebenen Spannstellung verbleiben und der Zahnseidenfaden 6 bei der Benutzung des Zahnseidenhalters 1 gespannt bleibt.

Die beiden Winkelhebel 10, 11 sind im Bereich der gemeinsamen Schwenkachse 14 mit eine Gelenkverbindung bildenden Steckverbindungsansätzen 24, 24' versehen (Fig. 2), so daß beispielsweise zum Zwecke der Reinigung eine einfache Montage und Demontage des gesamten Zahnseidenhalters 1 mit geringem Aufwand möglich ist. In vorteilhafter Ausführung bestehen die Winkelhebel 10, 11 aus einem Kunststoffmaterial, das eine Herstellung des Zahnseidenhalters 1 mit geringen Gestehungskosten auch mit bogenförmig abgewinkelten Spann-Hebelarmen 8, 9 (Fig. 2) ermöglicht.

Zur Festlegung des Zahnseidenfadens 6 im Bereich der vorderen Spann-Hebelarme 8, 9 sind jeweilige den Zahnseidenfaden 6 aufnehmende Bohrungen 26 mit einem Einlegeschlitz 27 vorgesehen (Fig.2), deren Größe so auf den Durchmesser des Zahnseidenfadens 6 abgestimmt ist, daß ein einfaches Einlegen möglich ist und eine sichere Positionierung in der Spannstellung erreicht wird.

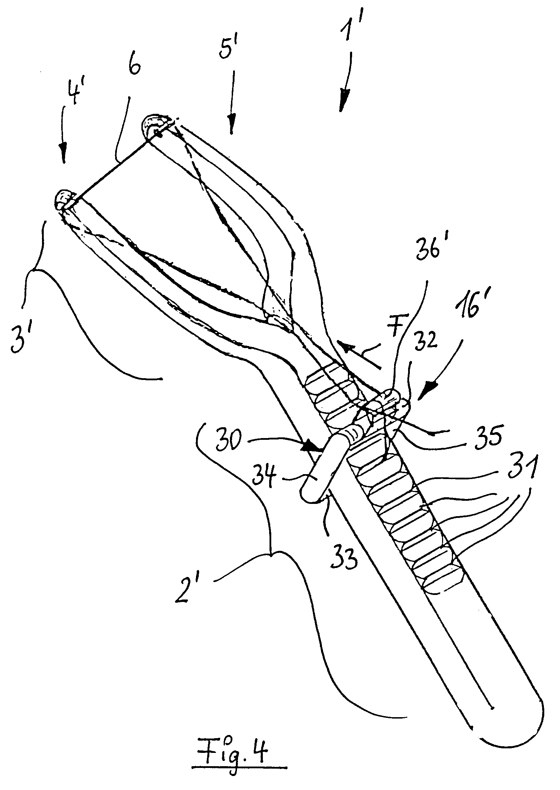

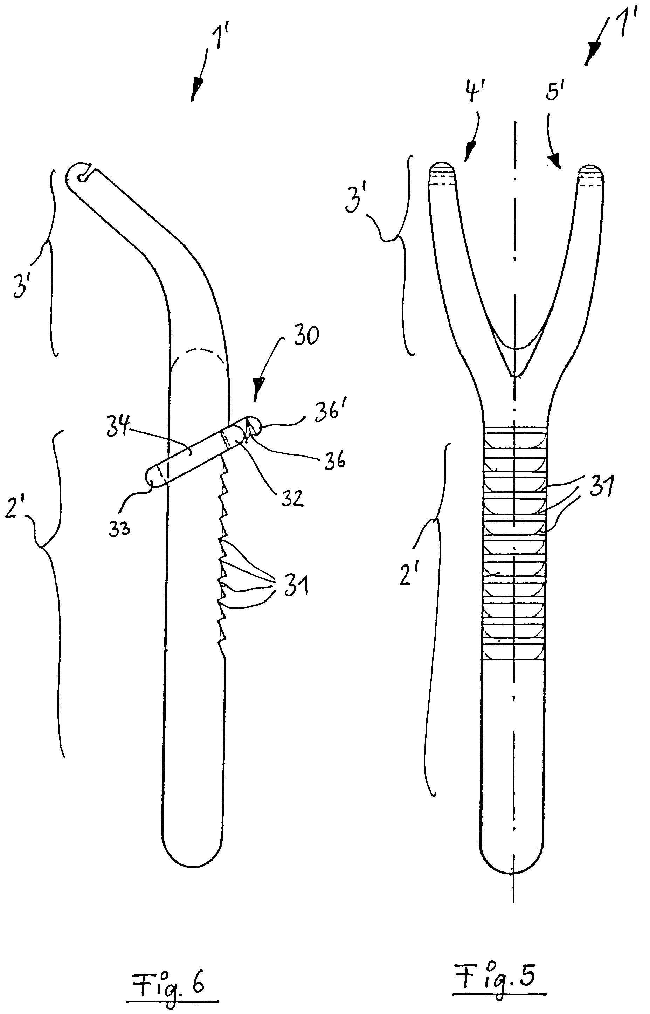

In Fig. 4 bis 6 ist eine zweite Ausführungsform eines Zahnseidenhalters 1' dargestellt, dessen Halteteil 16' als ein den Griffteil 2' umfassender Spannring 30 ausgebildet ist, der über jeweilige Rastmulden 31 am Griffteil 2' in unterschiedlichen Spannstellungen positionierbar und bei Einwirkung einer Zugkraft F über den Zahnseidenfaden 6' in dieser Stellung festlegbar ist.

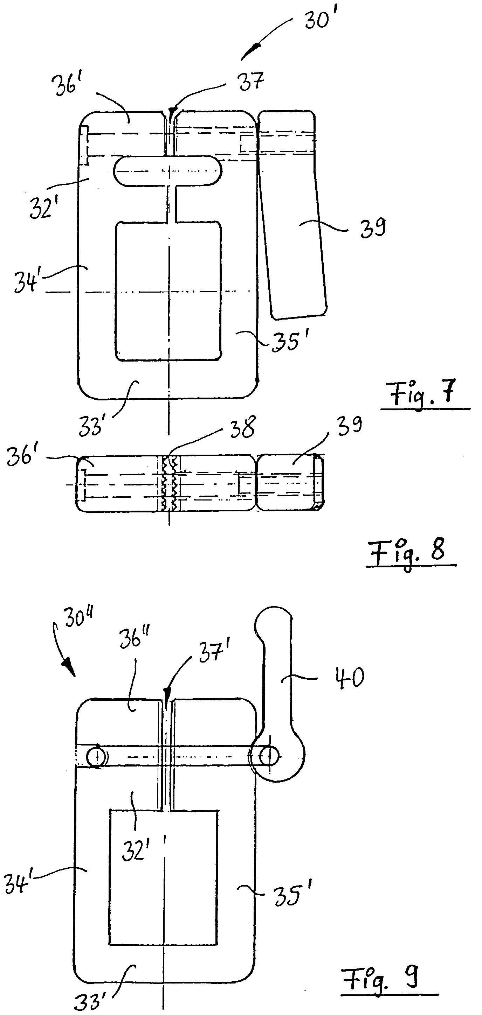

Der Spannring 30 ist dabei in zweckmäßiger Ausführung in einer Reckeckkontur mit jeweils parallelen Schenkelpaaren 32, 33 bzw. 34, 35 ausgebildet. Dabei ist der den Griffteil 2' übergreifende Schenkel 32 einerseits mit einem den gespannten Zahnseidenfaden 6 in einer Haltenut 36 aufnehmenden Ansatzteil 36' (Fig. 6) versehen und andererseits greift der Schenkel 32 in die Rastmulde 26 am Griffteil 2' ein (Fig. 4).

In Fig. 7 und Fig. 8 ist der Spannring 30' in Einzeldarstellung in einer zweiten Ausführungsform veranschaulicht, wobei am Schenkel 32' das Ansatzteil 36' mit einem Halteschlitz 37 vorgesehen ist, in dem der Zahnseidenfaden 6 (nicht dargestellt) im Bereich einer innenliegenden Verzahnung 38 über einen Drehverschluß 39 festlegbar ist (Fig. 8).

In einer weiteren Ausführungsform gemäß Fig. 9 ist der Spannring 30'' im Bereich des Ansatzteils 36'' mit einem den Halteschlitz 37' in Spannstellung verschließenden Exzenterhebel 40 versehen, der eine besonders einfache und schnelle Handhabung des Zahnseidenhalters 1 bzw. 1' ermöglicht.

## Patentansprüche

1. Zahnseidenhalter mit einem Griffteil (2, 2') und einem Gabelteil (3, 3') mit zwei Halteschenkeln (4, 5), zwischen denen zumindest ein Zahnseidenfaden (6) verspannbar ist, **dadurch gekennzeichnet**, daß die beiden Halteschenkel (4, 5) jeweils von einem Hebelarm (8, 9) zweier Winkelhebel (10, 11) gebildet und diese in gegensinniger Winkelausrichtung im Scheitelbereich ihrer Hebelarme (8, 9, 12, 13) um eine gemeinsame Achse (14) schwenkbar miteinander verbunden sind.

2. Zahnseidenhalter nach Anspruch 1, dadurch gekennzeichnet, daß die den Halteschenkeln (4, 5) auf der anderen Seite der Schwenkachse (14) gegenüberliegenden Hebelarme (12, 13) der beiden Winkelhebel (10, 11) gemeinsam den Griffteil (2) bilden.

3. Zahnseidenhalter nach Anspruch 1 oder 2, dadurch gekennzeichnet, daß zumindest einer der Griff-Hebelarme (12, 13) mit einem die jeweiligen Endbereiche (6') des zwischen den Spann-Hebelarmen (8, 9) befindlichen Zahnseidenfadens (6) aufnehmenden Halteteil (16) versehen ist.

4. Zahnseidenhalter nach Anspruch 3, dadurch gekennzeichnet, daß der Halteteil (16) von einem Bolzenansatz (17) gebildet ist, der einerseits an einem ersten der Griff-Hebelarme (13) abgestützt ist und mit seinem freien Ende andererseits in eine Aufnahmebohrung (18) im zweiten der Griff-Hebelarme (12) eingreift.

5. Zahnseidenhalter nach Anspruch 4, dadurch gekennzeichnet, daß der Bolzenansatz (17) mit einer die Endbereiche des Zahnseidenfadens (6) festlegenden Klemmnut (19) versehen ist.

6. Zahnseidenhalter nach einem der Ansprüche 1 bis 5, dadurch gekennzeichnet, daß die Griff-Hebelarme (12, 13) im Bereich ihres freien Endes mit einem diese in unterschiedlichen Spannstellungen festlegenden Rastverbinder (21) versehen sind.

7. Zahnseidenhalter nach Anspruch 6, dadurch gekennzeichnet, daß der Rastverbinder (21) mit einem am ersten Griff-Hebelarm (13) befindlichen Hakenteil (22) versehen ist und dieser einen Formansatz am zweiten Griff-Hebelarm (12) hintergreift.

8. Zahnseidenhalter nach einem der Ansprüche 1 bis 7, dadurch gekennzeichnet, daß die beiden Winkelhebel (10, 11) im Bereich der gemeinsamen Schwenkachse (14) mit eine Gelenkverbindung bildenden Steckverbindungsansätzen (24, 24') versehen sind.

9. Zahnseidenhalter nach einem der Ansprüche 1 bis 8, dadurch gekennzeichnet, daß Spann-Hebelarme (8, 9) jeweils eine den Zahnseidenfaden (6) aufnehmende Bohrung (26) mit Einlegeschlitz (27) aufweisen.

10. Zahnseidenhalter mit einem Griffteil (2') und einem Gabelteil (3') mit zwei Halteschenkeln (4', 5'), zwischen denen zumindest ein Zahnseidenfaden (6) verspannbar und dieser über ein Halteteil (16') im Bereich des Griffteils (2') festlegbar ist, dadurch gekennzeichnet, daß das Halteteil (16') als ein den Griffteil (2') umfassender Spannring (30) ausgebildet und dieser in jeweiligen Rastmulden (31) am Griffteil (2') in unterschiedlichen Spannstellungen festlegbar ist.

11. Zahnseidenhalter nach Anspruch 7, dadurch gekennzeichnet, daß der Spannring (30) eine parallele Schenkelpaare (32, 33, 34, 35) aufweisende Rechteckkontur aufweist und der den Griffteil (2') übergreifende Schenkel (32) einerseits mit einer den gespannten Zahnseidenfaden (6) aufnehmende Haltenut (36) versehen ist und andererseits in die Rastmulden (31) am Griffteil (2') eingreift.
